# EUROPEAN PATENT APPLICATION

(11) **EP 1 976 289 A2**
(43) Date of publication of application: **01.10.2008**
(21) Application number: 08005127.9
(22) Date of filing: 19.03.2008
(51) Int. Cl.: H04N 7/01

(54) **Video signal processing apparatus, video display apparatus and video signal processing method**

(30) Priority: 30.03.2007 JP 2007093562
(71) Applicant: Kabushiki Kaisha Toshiba, Minato-ku Tokyo 105-8001 (JP)
(72) Inventor: Tomonaga, Eiichiro c/o Toshiba Corp., Tokyo 105-8001 (JP); Namioka, Toshiyuki c/o Toshiba Corp., Tokyo 105-8001 (JP)
(74) Representative: HOFFMANN EITLE

(57) **Abstract**

According to one embodiment, a video signal processing apparatus (34) has a scaling processing unit (54) configured to perform scaling processing on a video signal, an expansion processing unit (53) configured to perform expansion processing on a video signal, and a switching unit (37) configured to switch whether the scaling processing unit (54) uses a video signal after being expanded by the expansion processing unit (53) or uses the video signal before being expanded by the expansion processing unit (53) according to a resolution of the video signal inputted to the expansion processing unit (53).

## Description

### BACKGROUND

### 1. Field

One embodiment of the invention relates to a video signal processing apparatus which performs scaling of inputted video signal, a video display apparatus and a video signal processing method.

### 2. Description of the Related Art

Conventionally, various types of video display apparatuses for displaying video are brought into practical use. As conventional image display apparatuses, portable video display apparatuses which display video of terrestrial digital broadcast for portable terminal apparatuses became widely popular in recent years along with stationary type video display apparatuses which receive broadcast waves of analog broadcast and digital broadcast and display the video of a program using video data taken out from the received broadcast waves.

Since the portable video display apparatuses have a smaller screen size as compared to the stationary type video display apparatuses, conventionally they are provided with a contrivance to perform display with an increased resolution. For example, in Japanese Patent Application Publication (KOKAI) No. 2006-337771 (patent document 1), there is disclosed an image processing apparatus which displays an image having a resolution equal to or larger than the resolution of a display by changing an image to be displayed according to movement of the equipment.

### SUMMARY OF THE INVENTION

In recent years, along with advance in popularization of digital broadcast and in enlargement of a display panel, a video display apparatus which receives a program of digital broadcast and displays video of the received program often has an image display panel capable of performing display with a high resolution (with 1920 horizontal × 1080 vertical pixels for example).

However, on the other hand, as a video signal (video signal compressed by MPEG) inputted to the video display apparatus, there exist signals having a resolution different from that of the video display panel. For example, even when the resolution of the video display panel is 1920 × 1080, there also exists a resolution of a video signal of 1440 × 1080 other than 1920 × 1080.

When inputting a video signal having a resolution that matches the resolution of the video display panel, good display contents can be obtained when the video signal is used to display video.

However, when inputting a video signal having a resolution different from the resolution of the video display panel (especially when a video signal having a resolution lower than the resolution of the video display panel), good display contents cannot be obtained as compared to the case where the signal resolution and the panel resolution match, if the video is displayed with scaling processing performed for matching with the size of the video display panel.

Accordingly, the invention is made to solve the above-described problems, and an object thereof is to provide a video signal processing apparatus, a video display apparatus and a video signal processing method which realize good display on a video display panel even when a video signal having any type of resolution is inputted.

To solve the above-described problems, the invention is characterized by a video signal processing apparatus having a scaling processing unit configured to perform scaling processing on a video signal, an expansion processing unit configured to perform expansion processing on a video signal, and a switching unit configured to switch whether the scaling processing unit uses a video signal after being expanded by the expansion processing unit or uses the video signal before being expanded by the expansion processing unit according to a resolution of the video signal inputted to the expansion processing unit.

Further, the invention provides a video display apparatus having a scaling processing unit configured to perform scaling processing on a video signal, an expansion processing unit configured to perform expansion processing on a video signal, a switching unit configured to switch whether the scaling processing unit uses a video signal after being expanded by the expansion processing unit or uses the video signal before being expanded by the expansion processing unit according to a resolution of the video signal inputted to the expansion processing unit, and a video display device configured to display video using a video signal on which the scaling processing by the scaling processing unit is performed.

Furthermore, the invention provides a video signal processing method for a video signal processing apparatus which includes a scaling processing unit configured to perform scaling processing on a video signal, and an expansion processing unit configured to perform expansion processing on a video signal, the method including switching whether the scaling processing unit uses a video signal after being expanded by the expansion processing unit or uses the video signal before being expanded by the expansion processing unit according to a resolution of the video signal inputted to the expansion processing unit.

As described in detail above, according to the invention, a video signal processing apparatus, a video display apparatus and a video signal processing method which realize good display on a video display panel even when a video signal having any type of resolution is inputted can be obtained.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is a block diagram showing a structure of a television broadcast receiving apparatus according to an embodiment of the invention;
FIG. 2 is a block diagram showing a signal processing unit, a control unit and a video display panel;

FIG. 3 is a flowchart showing a control procedure by which the control unit controls an operation of the signal processing unit; and

FIG. 4 is a flowchart showing an example of expansion processing by a super-resolution algorithm processing unit.

### DETAILED DESCRIPTION

Various embodiments according to the invention will be described hereinafter with reference to the accompanying drawings.

### (A Structure of a Television Broadcast Receiving Apparatus)

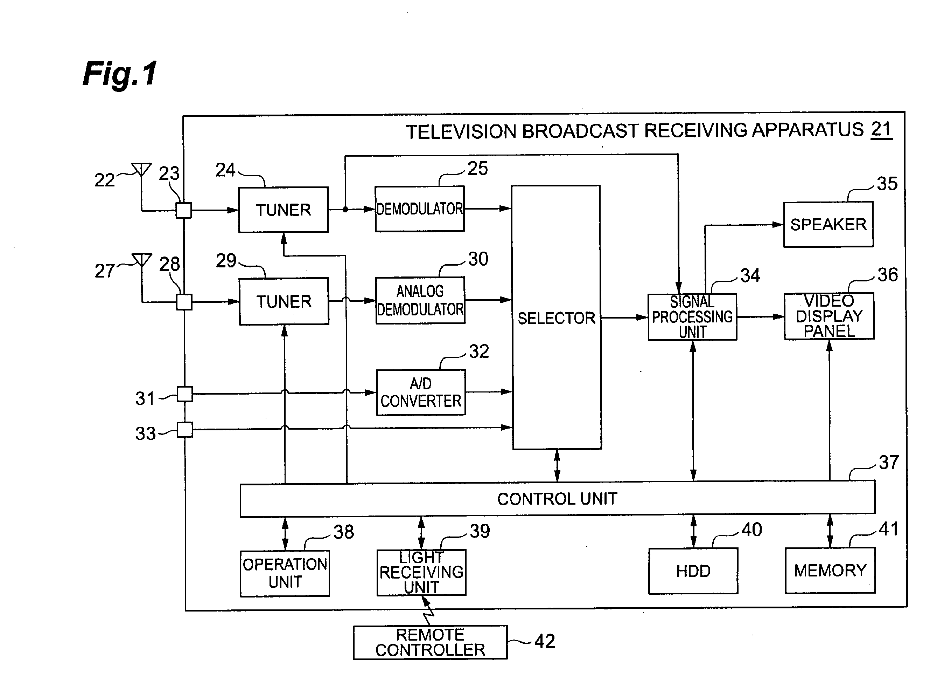

FIG. 1 is a block diagram showing a structure of a television broadcast receiving apparatus 21 according to an embodiment of the invention. The television broadcast receiving apparatus 21 is a stationary type video display apparatus which receives a broadcast wave of analog broadcast and a broadcast wave of digital broadcast, and uses video signals taken out from the respective received broadcast waves to display video of a program.

The television broadcast receiving apparatus 21 has an antenna 22, an input terminal 23, a tuner 24 and a demodulator 25.
The antenna 22 captures the broadcast wave of digital broadcast and supplies a broadcast signal of the broadcast wave to the tuner 24 via the input terminal 23.
The tuner 24 selects a broadcast signal of a desired channel from the inputted broadcast signal of digital broadcast.

Then, a broadcast signal outputted from the tuner 24 is supplied to the demodulator 25. The demodulator 25 performs demodulation processing on the broadcast signal to demodulate a digital video signal and sound signal, and supplies them to a selector 26, which will be described later.
Further, the television broadcast receiving apparatus 21 has an antenna 27, an input terminal 28, a tuner 29 and an analog demodulator 30.

The antenna 27 captures the broadcast wave of analog broadcast and supplies a broadcast signal of the broadcast wave to the tuner 29 via the input terminal 2 8 .
The tuner 29 selects a broadcast signal of a desired channel from the inputted broadcast signal of analog broadcast.

Then, the broadcast signal outputted from the tuner 29 is demodulated by the analog demodulator 30, further converted into a digital signal, and thereafter outputted to the selector 26.

Further, the television broadcast receiving apparatus 21 has input terminals 31, 33, an A/D converter 32, a signal processing unit 34, a speaker 35 and a video display panel 36.

An analog video signal and sound signal from the outside are inputted to the input terminal 31, and a digital video signal and sound signal from the outside are inputted to the input terminal 33. The A/D converter 32 converts the analog video signal and sound signal supplied from the input terminal 31 into digital signals, and supplies them to the selector 26.

The selector 26 selects one of digital video signals and sound signals supplied from the demodulator 25, the analog demodulator 30, the A/D converter 32 and the input terminal 33, and supplies the selected signal to the signal processing unit 34.

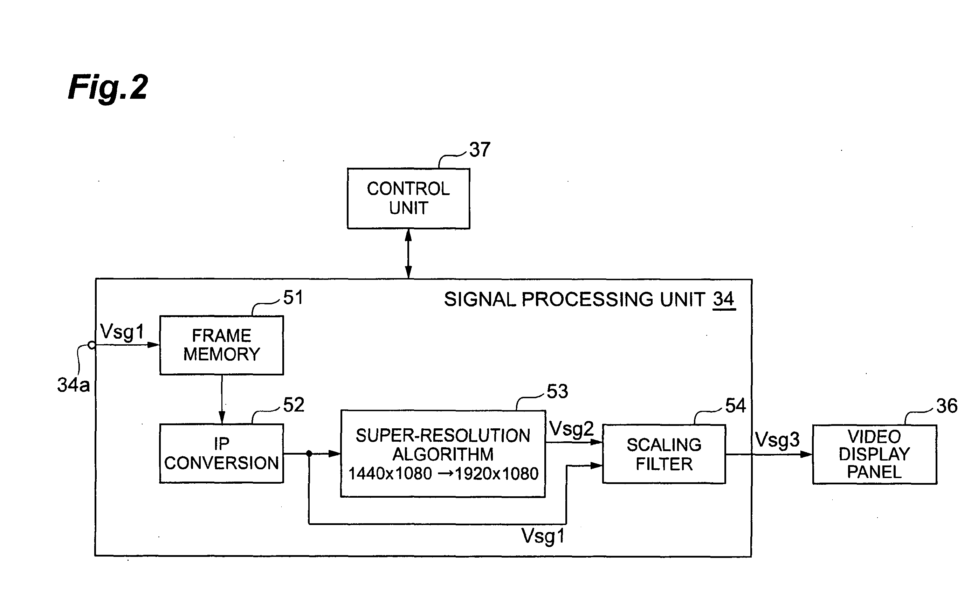

The signal processing unit 34 performs predetermined signal processing, scaling processing, and/or the like on an inputted video signal, and supplies a video signal after being processed to the video display panel 36. Further, the signal processing unit 34 performs predetermined signal processing on an inputted digital sound signal to convert it to an analog sound signal, and outputs the converted sound signal to the speaker 35. In addition, as will be described in detail later, the signal processing unit 34 includes a structure shown in FIG. 2. Further, in FIGs. 1, 2, although not shown, the television broadcast receiving apparatus 21 has at least a TS demultiplexer and an MPEG decoder, and a signal after being decoded by the MPEG decoder is inputted to the signal processing unit 34 shown in FIG. 2.

Furthermore, the signal processing unit 34 also generates an OSD (On Screen Display) signal for displaying on the video display panel 36.

The speaker 35 inputs the sound signal supplied from the signal processing unit 34 and outputs sound using the sound signal.

Then, the video display panel 36 is constituted of a flat panel display such as a liquid crystal display, a plasma display, or the like. The video display panel 36 displays video using the video signal supplied from the signal processing unit 34. In this embodiment, the video display panel 36 is capable of performing video display with a high resolution, which will be described later.

Further, the television broadcast receiving apparatus 21 has a control unit 37, an operation unit 38, a light receiving unit 39, an HDD (Hard Disk Drive) 40 and a memory 41.

The control unit 37 comprehensively controls various operations in the television broadcast receiving apparatus 21. The control unit 37 is a microprocessor including a CPU (central processing unit) and so on. The control unit 37 inputs operation information from the operation unit 38 and meanwhile inputs operation information transmitted from a remote controller 42 via the light receiving unit 39, and controls the respective units according to the operation information.

In this case, the control unit 37 uses the memory 41. The memory 41 mainly has a ROM (Read Only Memory) storing a control program which is executed by the CPU included in the control unit 37, a RAM (Random Access Memory) for providing a work area for the CPU, and a non-volatile memory which stores various setting information, control information, and so on.

The HDD 40 has a function as a recording device to record the digital video signal and sound signal selected by the selector 26. Since the television broadcast receiving apparatus 21 has the HDD 40, the digital video signal and sound signal selected by the selector 26 can be recorded in the HDD unit 40. Further, the television broadcast receiving apparatus 21 can also use the digital video signal and sound signal recorded in the HDD 40 to reproduce video and sound.

### (A Structure of the Signal Processing Unit)

The signal processing unit 34 has, as shown in FIG. 2, a frame memory 51, an IP conversion unit 52, a super-resolution algorithm processing unit 53 and a scaling filter 54.

The frame memory 51 inputs a digital video signal Vsg1 selected in the selector 26 from a terminal 34a and stores it. In the case of this embodiment, the video signal Vsg1 is a video signal having 1440 horizontal × 1080 vertical pixels (hereinafter referred to as "low resolution"), or a video signal having 1920 horizontal x 1080 vertical pixels (hereinafter referred to as "high resolution"), both of which being a video signal in interlaced format (interlaced scan format).

A video signal from the frame memory 51 is inputted to the IP conversion unit 52. The IP conversion unit 52 is a conversion device which converts a video signal in interlaced format into a video signal in progressive format (progressive scan format), and is arranged in a front stage of the super-resolution algorithm processing unit 53.

The super-resolution algorithm processing unit 53 performs expansion processing on the video signal Vsg1 in progressive format converted in the IP conversion unit 52 according to a super-resolution algorithm, and converts this signal into a video signal Vsg1 having the resolution (high resolution) of the video display panel 36. The super-resolution algorithm processing unit 53 will be described in more detail later. In addition, the super-resolution algorithm is a method of obtaining information that does not exist in the original image by estimation, and details of which will be described later.

The scaling filter 54 selects a video signal Vsg2 outputted from the super-resolution algorithm processing unit 53 when the video signal Vsg1 inputted to the super-resolution algorithm processing unit 53 has a low resolution, or selects the video signal Vsg1 outputted from the IP conversion unit 52 when the inputted video signal Vsg1 has a high resolution. This selection is performed according to control by the control unit 37.

Then, the scaling filter 54 performs scaling processing on the inputted video signal Vsg1 (or Vsg2) for adapting to the screen size of the video display panel 36, and outputs a video signal Vsg3 to the video display panel 36. In addition, the scaling processing performed by the scaling filter 54 also has over-scan processing, as will be described in detail later.

### (Operation Contents of the Signal Processing Unit)

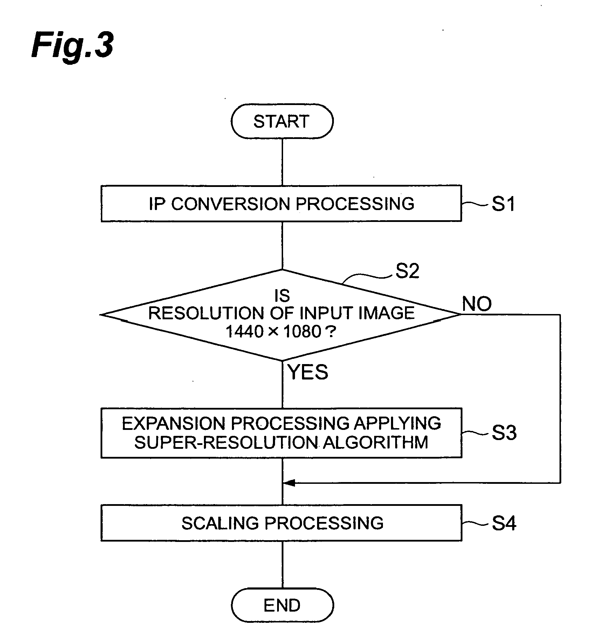

Next, operation contents of the signal processing unit 34 will be explained with reference to FIG. 3. FIG. 3 is a flowchart showing a control procedure by which the control unit 37 controls an operation of the signal processing unit 34. The signal processing unit 34 switches an operation, which will be described later, according to control by the control unit 37 and then executes the scaling processing.

Upon start of the operation, the control unit 37 gives an instruction to the IP conversion unit 52 of the signal processing unit 34. Then, the IP conversion unit 52 converts the inputted video signal Vsg1 from interlaced format into progressive format (S1).

Next, the control unit 37 advances to S2. The control unit 37 judges whether or not the video signal Vsg1 is a low-resolution video signal (whether or not the number of pixels in the horizontal direction of the video signal Vsg1 is smaller than the number of pixels in the horizontal direction of the video display panel 36), and causes the signal processing unit 34 to switch the operation according to the result of the determination. In this case, the control unit 37 performs an operation as a switching unit.

Specifically, the control unit 37 controls so that scaling processing by applying the super-resolution algorithm is performed when the video signal Vsg1 is a low-resolution video signal, and scaling processing by not applying the super-resolution algorithm is performed when the video signal Vsg1 is a high-resolution video signal.

Then, in the signal processing unit 34, when the video signal Vsg1 is a low-resolution video signal, the scaling filter 54 executes the scaling processing (S4) using the video signal Vsg2 after being expanded by the expansion processing (S3) by the super-resolution algorithm processing unit 53. Further, in the signal processing unit 34, when the video signal Vsg1 is a high-resolution video signal, the scaling filter 54 executes the scaling processing using the video signal Vsg1 before being expanded.

Then, the super-resolution algorithm processing unit 53 executes the expansion processing on the video signal applying the super-resolution algorithm to convert the video signal Vsg1 having a low resolution into the video signal Vsg2 having a high resolution. As will be described in detail later, the super-resolution algorithm processing unit 53 performs the expansion processing of converting the number of pixels in the horizontal direction of the video signal Vsg1 having a low resolution from 1440 to 1920, and thereby making the video signal Vsg1 having a low resolution have the number of pixels (1920) corresponding to that in the horizontal direction of the video display panel 36.

Further, the scaling filter 54 executes the scaling processing (S4) after selecting one of the video signal Vsg1 outputted from the IP conversion unit 52 and the video signal Vsg2 outputted from the super-resolution algorithm processing unit 53.

When the scaling filter 54 executes the scaling processing, the operation of the signal processing unit 34 finishes.

As above, in the television broadcast receiving apparatus 21, when the video signal Vsg1 inputted to the signal processing unit 34 has a low resolution, the video signal Vsg2 expanded to the same high resolution as the video display panel 36 by the expansion processing of the super-resolution algorithm processing unit 53 is used instead of the video signal Vsg1 having a low resolution.

Accordingly, without depending on the resolution of an inputted video signal, video of good quality can be displayed by the video display panel 36 with any type of resolution the inputted video signal has.

Normally, in a broadcast signal superposed on a broadcast wave, a video signal constituting an edge portion of video includes an unnecessary signal component and/or the like. Accordingly, when video is displayed on the video display panel 36, there is performed over-scan processing to over-scan the video signal so that video of the edge portion is positioned on the outside of the panel, instead of displaying the entire video inside the panel. In this manner, the television broadcast receiving apparatus 21 is configured so that video of the edge portion including noise components is not displayed on the video display panel 36.

On the other hand, in the scaling processing, other than a normal mode in which the video signal having an aspect ratio of 4:3 is displayed without changing the ratio in the middle of a screen having an aspect ratio of 16:9, there is one called zoom mode in which a video signal including video in a black strip shape on upper and lower sides of the screen with the aspect ratio of 4:3 is enlarged both vertically and horizontally and displayed in the middle of the screen having the aspect ratio of 16:9. In scaling processing of this zoom mode, a part that protrudes from the display panel is generated on an edge portion of video. In this case, the scaling processing combines an operation as the over-scan processing.

Further, new pixels are obtained by calculation in such scaling processing, but when the scaling processing adapted to the video signal Vsg1 having a high resolution is also applied to the video signal Vsg1 having a low resolution, it results in that pixels are obtained by calculation based on pixels which originally do not exist, which causes blunting or the like of the video signal after the scaling processing and thereby deteriorates the image quality.

Conventional scaling processing on the video signal Vsg1 having a low resolution combines the expansion processing of changing the number of pixels in the horizontal direction from 1440 to 1920, and in the expansion thereof, blunting or the like of the video signal occurs and thereby deteriorates the image quality.

However, in this embodiment, the super-resolution algorithm processing unit 53 is arranged in the front stage of the scaling filter 54. When the video signal Vsg1 having a low resolution is expanded to the same resolution as the video signal Vsg1 having a high resolution by the super-resolution algorithm processing unit 53, the expansion of converting the number of pixels from 1440 to 1920 becomes no longer necessary in the scaling processing, and blunting of the video signal can be avoided. Moreover, the resolution of the video signal inputted to the scaling filter 54 can be fixed. Thus, by fixing the ratio of scaling, it is possible to avoid increase of a circuit scale or the like and thereby limit the circuit scale.

Accordingly in the television broadcast receiving apparatus 21, on the video signal Vsg1 having a low resolution, the expansion processing by the super-resolution algorithm processing unit 53 is performed to expand it to the video signal Vsg2 having the same resolution as the video display panel 36, and then the scaling processing in the scaling filter 54 is performed.

As above, in the television broadcast receiving apparatus 21, it is possible to display a vivid image with increased sharpness. That is, with the television broadcast receiving apparatus 21, display contents with equal image quality to that in the case of a video signal having a high resolution can be obtained even when the format of a video signal transmitted by superposing on a broadcast wave is of a video signal having a low resolution.

### (Regarding the Super-resolution Algorithm Processing Unit)

As described above, the super-resolution algorithm processing unit 53 performs the expansion processing on a video signal according to the super-resolution algorithm. In the expansion processing by the super-resolution algorithm processing unit 53, pixels that cannot be reproduced by the scaling processing in the scaling filter 54 are reproduced based on prediction using folding components or the like.

Here, the super-resolution means to restore a video signal having a higher resolution than the original video signal using a video signal having a low resolution. Regarding this kind of method, there are iteration method, frequency domain method, statistical method, and the like, and the super-resolution algorithm processing unit 53 performs the expansion processing on a video signal according to the super-resolution algorithm of the iteration method for example. In addition, the iteration method is mainly constituted of three phases (initial estimation, imaging process and reconstruction process).

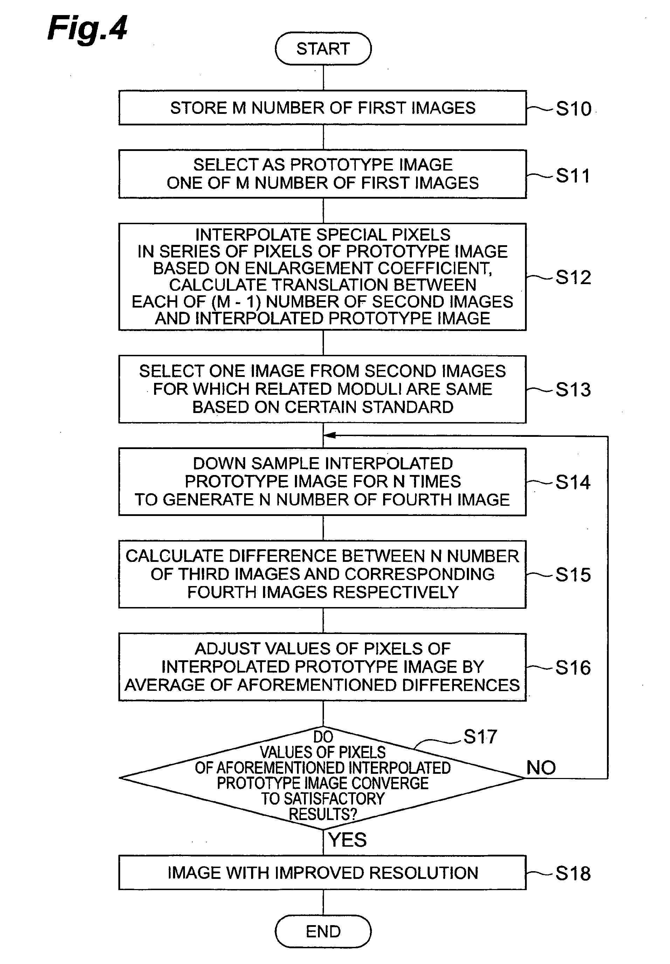

Then, when the super-resolution algorithm processing unit 53 follows the super-resolution algorithm of the iteration method for example, it performs the expansion processing on a video signal according to the flowchart shown in FIG. 4.

The super-resolution algorithm processing unit 53 uses M number of first low-resolution images. The M number of first low-resolution images are a series of images (series of observed images) having slight differences, such as plural frames of images from imaging the same object (same scene) with displacements such as different angles, distances, times, or the like or sequential images in video.

In this embodiment, use of the sequential images in video is assumed. The M number of first low-resolution images are related to the same scene, and hence all of the M number of first low-resolution images are captured from the same scene. Further, each of the M number of first images is displayed by a series of pixels which are evenly sampled and quantized.

Then, first the super-resolution algorithm processing unit 53 stores the M number of first images in a predetermined storage unit (S10).

Next, the super-resolution algorithm processing unit 53 selects one of the M number of first images as a prototype image, and correlates with second images the (M - 1) number of remaining first images which are not selected (S11).

Subsequently, the super-resolution algorithm processing unit 53 executes the next operation as the initial estimation phase (S12). In S12, special pixels are interpolated in the prototype image based on an enlargement coefficient. In S12, values of the special pixels are calculated according to values of adjacent pixels thereof. Further, an interpolated prototype image is generated, and there is performed calculation of each translation existing between each of the (M - 1) number of second images and the interpolated prototype image.

Next, the operation advances to S13, and the super-resolution algorithm processing unit 53 executes S13 as an automatic image selection phase. In S13, the super-resolution algorithm processing unit 53 subtracts the enlargement coefficient from the translations of the (M - 1) number of second images to obtain moduli for the translations of the M (M - 1) number of second images.

Further, in S13 the super-resolution algorithm processing unit 53 selects one image from second images for which the related moduli are the same based on a certain standard. The selected second image is correlated with N number of third images together with remaining second images for which the related moduli are different. Here, N is equal to or smaller than (M - 1).

Thereafter, the super-resolution algorithm processing unit 53 advances to S14 to down sample the interpolated prototype image for N times with the respective translations between the N number of third images and the interpolated prototype image to generate N number of fourth images. Each of the N number of fourth images corresponds to one image out of the N number of third images.

After S14, the super-resolution algorithm processing unit 53 executes S15 to calculate differences between the N number of third images and the corresponding fourth images, respectively.

Next, the super-resolution algorithm processing unit 53 executes S16 to adjust values of pixels of the interpolated prototype image by the average of the differences calculated in S15.

Further, the super-resolution algorithm processing unit 53 executes S17 to determine whether or not values of pixels of the interpolated prototype image converge to satisfactory results. Here, when the values of the pixels of the interpolated prototype image converge to satisfactory results, the super-resolution algorithm processing unit 53 advances to S18, and otherwise returns to S14 to execute S14 to S17 repeatedly.

In this manner, the interpolated prototype image with values of pixels converging to satisfactory results is correlated with an image with improved resolution.

As another super-resolution algorithm in the super-resolution algorithm processing unit 53, there is a reconstruction-based super-resolution processing. In this reconstruction-based super-resolution processing, first an initial high-resolution image is set, and respective pixel values of a low-resolution image as an observed image are estimated from the initial image based on a camera model. Then, the high-resolution image is updated so that errors between the estimated pixel values and actual observed pixel values are minimized. The reconstruction-based super-resolution processing is a method of obtaining a high-resolution image by repeating this update processing until reaching convergence.

It should be noted that although the above embodiment is explained with the case of inputting the video signal Vsg1 with 1440 horizontal × 1080 vertical pixels being taken as an example, the invention can also be applied to a case of inputting a video signal Vsg1 having different number of horizontal × vertical pixels.

The above description is for explaining the embodiment of the invention and does not limit the apparatus and the method of the invention, and various modification examples thereof can be implemented easily. Further, an apparatus or a method formed by appropriately combining the components, functions, features or method steps in each embodiment is also included in the invention.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A video signal processing apparatus (34), comprising:
a scaling processing unit (54) configured to perform scaling processing on a video signal;
an expansion processing unit (53) configured to perform expansion processing on a video signal; and
a switching unit (37) configured to switch whether said scaling processing unit (54) uses a video signal after being expanded by said expansion processing unit (53) or uses the video signal before being expanded by said expansion processing unit (53) according to a resolution of the video signal inputted to said expansion processing unit (53).

2. The video signal processing apparatus (34) according to claim 1, wherein said expansion processing unit (53) is arranged in a front stage of said scaling processing unit (54).

3. The video signal processing apparatus (34) according to claim 1, wherein said switching unit (37) performs switching so that a video signal after being expanded by said expansion processing unit (53) is used when the number of pixels in a horizontal direction of the video signal inputted to said expansion processing unit (53) is smaller than the number of pixels in a horizontal direction of a video display device which displays video using a video signal on which the scaling processing is performed.

4. The video signal processing apparatus (34) according to any one of claim 1 to claim 3, wherein said expansion processing unit (53) performs the expansion processing according to a super-resolution algorithm that uses the video signal to restore a video signal having a higher resolution than an original video signal.

5. The video signal processing apparatus (34) according to any one of claim 1 to claim 4, further comprising a conversion device (52) configured to convert the video signal from an interlaced format into a progressive format, said conversion device (52) being arranged in a front stage of said expansion processing unit (53).

6. The video signal processing apparatus (34) according to any one of claim 1 to claim 5, wherein said switching unit (37) performs switching so that a video signal after being expanded by said expansion processing unit (53) is used when the number of pixels in a horizontal direction of the video signal inputted to said expansion processing unit (53) is 1440.

7. The video signal processing apparatus (34) according to any one of claim 1 to claim 6, wherein said scaling processing unit (54) performs over-scan processing together with the scaling processing on the video signal.

8. A video display apparatus (21), comprising:
a scaling processing unit (54) configured to perform scaling processing on a video signal;
an expansion processing unit (53) configured to perform expansion processing on a video signal;
a switching unit (37) configured to switch whether said scaling processing unit (54) uses a video signal after being expanded by said expansion processing unit (53) or uses the video signal before being expanded by said expansion processing unit (53) according to a resolution of the video signal inputted to said expansion processing unit (53); and
a video display device (36) configured to display video using a video signal on which the scaling processing by said scaling processing unit (54) is performed.

9. A video signal processing method for a video signal processing apparatus (34) which comprises a scaling processing unit (54) configured to perform scaling processing on a video signal, and an expansion processing unit (53) configured to perform expansion processing on a video signal, the method comprising
switching whether the scaling processing unit (54) uses a video signal after being expanded by the expansion processing unit (53) or uses the video signal before being expanded by the expansion processing unit (53) according to a resolution of the video signal inputted to the expansion processing unit (53).
